# EUROPÄISCHE PATENTSCHRIFT

(11) **EP 4 217 205 B1**
(45) Veröffentlichungstag und Bekanntmachung des Hinweises auf die Patenterteilung: **17.09.2025**
(21) Anmeldenummer: 21782879.7
(22) Anmeldetag: 17.09.2021
(51) Int. Cl.: B42D 25/30, G02B 5/18, G02B 5/26, B42D 25/425

(54) **OPTISCH VARIABLES SICHERHEITSELEMENT MIT REFLEKTIVEM FLÄCHENBEREICH**
OPTICALLY VARIABLE SECURITY ELEMENT HAVING A REFLECTIVE SURFACE REGION
ÉLÉMENT DE SÉCURITÉ OPTIQUEMENT VARIABLE COMPORTANT UNE ZONE DE SURFACE RÉFLÉCHISSANTE

(30) Priorität: 28.09.2020 DE 102020005932
(43) Veröffentlichungstag der Anmeldung: 02.08.2023
(73) Patentinhaber: Giesecke+Devrient Currency Technology GmbH, 81677 München (DE)
(72) Erfinder: HOFFMÜLLER, Winfried, 83646 Bad Tölz (DE); SOBOL, Michael, 81379 München (DE); RAUCH, Andreas, 82441 Ohlstadt (DE)
(74) Vertreter: Giesecke+Devrient IP
(86) Internationale Anmeldenummer: PCT/EP2021/025354
(87) Internationale Veröffentlichungsnummer: WO 2022/063430

(56) Entgegenhaltungen:
- WO-A1-97/19820
- DE-A1- 102014 019 088
- DE-A1- 102018 009 912
- DE-A1- 102018 103 236

## Beschreibung

Die Erfindung betrifft ein optisch variables Sicherheitselement zur Absicherung von Wertgegenständen mit einem reflektiven Flächenbereich. Die Erfindung betritt auch ein Verfahren zum Herstellen eines solchen Sicherheitselements sowie einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgebrachten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes grafisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

Vor einiger Zeit wurden optisch variable Sicherheitselemente vorgeschlagen, die zwei, in unterschiedlichen Höhenstufen angeordnete und jeweils mit einer Farbbeschichtung versehene Reliefstrukturen aufweisen (siehe WO 2020/011390 A1, WO 2020/011391 A1 und WO 2020/011391 A2).

DE 10 2018 009912 A1 zeigt ein Verfahren zum Herstellen eines optisch variablen Sicherheitselements, bei dem eine Nichtmetall-Beschichtung selektiv von einer höher liegenden Reliefstruktur abgehoben wird. WO 97/19820 A1 betrifft einen optischen Datenträger mit zwei diffraktiven Reliefstrukturen auf unterschiedlichen Höhenstufen. DE 10 2014 019088 A1 betrifft ein optisch variables Durchsichtsicherheitselement, mit einem optisch variablen Flächenmuster, das in Durchsicht ein farbiges Erscheinungsbild mit einem betrachtungswinkelabhängigen mehrfarbigen Farbwechsel zeigt. DE 10 2018 103236 A1 offenbart ein optisches variables Sicherheitselement, welches eine Schicht mit Durchlass- und Blockierbereichen umfasst, die als Maske für die lithographische Fixierung eines passgenauen Farbmusters eingesetzt wird.

Ausgehend davon liegt der Erfindung die Aufgabe zugrunde, ein gattungsgemäßes optisch variables Sicherheitselement mit attraktivem Erscheinungsbild und hoher Fälschungssicherheit vorzuschlagen, das zudem einfach und kostengünstig herstellbar sein soll. Insbesondere soll das Sicherheitselement mit einem mehrfarbigen reflektiven Flächenbereich ausgestattet werden können, der zumindest zwei, aus unterschiedlichen Betrachtungsrichtungen erkennbare, verschiedenfarbige Erscheinungsbilder zeigt.

Diese Aufgabe wird durch die Merkmale des unabhängigen Anspruchs gelöst. Weiterbildungen der Erfindung sind Gegenstand der abhängigen Ansprüche.

Die Erfindung enthält zur Lösung der genannten Aufgabe ein optisch variables Sicherheitselement mit einem reflektiven Flächenbereich, welches insbesondere zur Absicherung von Wertgegenständen eingesetzt werden kann. Die Flächenausdehnung des Sicherheitselements definiert dabei eine Ebene und eine auf der Fläche senkrecht stehende z-Achse.

Der reflektive Flächenbereich enthält eine flächige, transmissive, insbesondere reflektive, Primärstruktur, die durch eine Druck- oder Prägestruktur gebildet ist. Die flächige Primärstruktur ist von einer Sekundärstruktur in Form einer Prägelackschicht bedeckt, die eine eingeprägte Reliefstruktur enthält und die zudem in Blockierungsbereichen eine niedrige und in Durchlassbereichen eine hohe Durchlässigkeit für eine Vernetzungsstrahlung, insbesondere für UV-Strahlung aufweist.

Die Vernetzungsstrahlung ist vorzugsweise UV-Strahlung, aber auch Elektronenstrahlung oder hochenergetische sichtbare Strahlung im blauen oder violetten Spektralbereich kann zum Einsatz kommen. Die Vernetzungsstrahlung dient der Vernetzung und damit Härtung einer vernetzbaren Schicht des Sicherheitselements, insbesondere der weiter unten genauer beschriebenen Waschfarbe.

Das Sicherheitselement enthält weiter eine reflexionserhöhende Beschichtung, die die Sekundärstruktur und, sofern die Durchlassbereiche durch Aussparungen in der Sekundärstruktur gebildet sind, in den Durchlassbereichen auch die Primärstruktur beschichtet. Die reflexionserhöhende Beschichtung folgt dabei mit Vorteil dem Reliefverlauf der Reliefstruktur der Sekundärstruktur-Prägelackschicht. Sind die Durchlassbereiche durch Materialbereiche der Sekundärstruktur gebildet, kann die reflexionserhöhende Beschichtung direkt auch nur eine Beschichtung der Sekundärstruktur darstellen.

Auf der der Sekundärstruktur gegenüberliegenden Seite der flächigen Primärstruktur ist deckungsgleich mit den Durchlassbereichen eine vernetzte, lasierend eingefärbte Waschfarbe angeordnet, die der Primärstruktur in den Durchlassbereichen eine Farbwirkung verleiht. Die Waschfarbe kann direkt auf der Primärstruktur aufgebracht sein oder kann von dieser auch durch eine oder mehrere lichtdurchlässige Zwischenschichten, insbesondere eine transparente Trägerfolie getrennt sein.

In einer bevorzugten Ausgestaltung sind die Durchlassbereiche der Sekundärstruktur durch Aussparungen der Sekundärstruktur gebildet. Die Sekundärstruktur bedeckt in dieser Erfindungsvariante die Primärstruktur daher nur teilweise, wobei die Materialbereiche der Sekundärstruktur die genannten Blockierungsbereiche mit niedriger Durchlässigkeit für die Vernetzungsstrahlung und die ausgesparten Bereiche der Sekundärstruktur die Durchlassbereiche hoher Durchlässigkeit bilden.

In einer anderen, ebenfalls vorteilhaften Ausgestaltung sind die Durchlassbereiche und die Blockierungsbereiche der Sekundärstruktur jeweils durch Materialbereiche der Sekundärstruktur gebildet, die sich in ihrer Durchlässigkeit für die Vernetzungsstrahlung unterscheiden. Beispielsweise können die Blockierungsbereiche einen Absorber für die Vernetzungsstrahlung enthalten, während die Durchlassbereiche keinen oder eine geringe Menge an Absorber enthalten. Die Blockierungsbereiche und die Durchlassbereiche können sich auch in ihrer Farbe unterscheiden, wobei die Farbe der Blockierungsbereiche eine höhere Absorption der Vernetzungsstrahlung bewirkt als die Farbe der Durchlassbereiche. Die Durchlassbereiche können auch in einem ansonsten homogenen Material durch dünnere Materialbereiche der Sekundärstruktur gebildet sein und dadurch eine höhere Durchlässigkeit für die Vernetzungsstrahlung aufweisen.

Zumindest in den Blockierungsbereichen der Sekundärstruktur ist mit Vorteil ein Absorber für die Vernetzungsstrahlung, insbesondere ein UV-Absorber vorgesehen. Wie erwähnt, folgt die reflexionserhöhende Beschichtung mit Vorteil zumindest in den Blockierungsbereichen dem Reliefverlauf der Reliefstruktur der Sekundärstruktur-Prägelackschicht.

In einer besonders bevorzugten Ausgestaltung ist die Primärstruktur in Form einer weiteren Prägelackschicht ausgebildet, die mit einer eingeprägten Reliefstruktur versehen ist, die vorzugsweise unterschiedlich zu der Reliefstruktur der Sekundärstruktur-Prägelackschicht ausgebildet ist. Dabei kann weiter vorgesehen sein, dass die reflexionserhöhende Beschichtung in durch Aussparungen gebildeten Durchlassbereichen der Sekundärstruktur dem Reliefverlauf der weiteren Reliefstruktur der Primärstruktur folgt. Besonders vorteilhaft bildet die reflexionserhöhende Beschichtung dann eine gemeinsame Beschichtung der Primär- und Sekundärstruktur und folgt in den Blockierungsbereichen dem Reliefverlauf der Reliefstruktur der Sekundärstruktur-Prägelackschicht und in durch Aussparungen gebildeten Durchlassbereichen der Sekundärstruktur dem Reliefverlauf der weiteren Reliefstruktur der Primärstruktur.

Sind sowohl die Primärstruktur als auch die Sekundärstruktur durch Prägelackschichten mit einer eingeprägten Reliefstruktur gebildet, so sind die beiden eingeprägten Reliefstrukturen insbesondere in z-Richtung in unterschiedlichen Höhenstufen angeordnet und bilden eine tiefer liegende und eine höher liegende Reliefstruktur. Der Abstand der unterschiedlichen Höhenstufen in z-Richtung liegt dabei typischerweise bei nur wenigen Mikrometern, insbesondere zwischen 1 µm und 10 µm, vorzugsweise zwischen 3 µm und 7 µm.

Auch wenn dies gegenwärtig bevorzugt ist, muss die Primärstruktur nicht zwingend in Form einer weiteren Prägelackschicht ausgebildet sein. Vielmehr kann die Primärstruktur auch beispielsweise auch durch einen reflektiven oder transmissiven Aufdruck gebildet sein, zu dessen Ausbildung klassische Druckverfahren wie Offsetdruck, Hochdruck, indirekter Hochdruck, Flexodruck, Tiefdruck oder Siebdruck, aber auch digitale Druckverfahren wie Ink-Jet-Druck, Laserdruck, Thermosublimationsdruck, Thermotransferdruck, oder indirekter Ink-Jet-Druck wie Nanoprinting eingesetzt werden können.

Die Primärstruktur kann farblos oder gefärbt sein, und sie kann transparent oder transluzent ausgebildet sein. Eine transparente oder transluzente Primärstruktur ist einerseits transmissiv und kann zudem reflektiv ausgebildet sein, beispielsweise wenn hochbrechende Materialien zum Einsatz kommen. Die Primärstruktur kann auch Lumineszenzstoffe, IR-absorbierende Stoffe, magnetische Stoffe oder andere maschinenlesbare Merkmalsstoffe enthalten.

Die Sekundärstruktur-Prägelackschicht ist vorteilhaft lasierend eingefärbt, vorzugsweise mit einer Farbwirkung, die sich von der Farbwirkung der lasierend eingefärbten Waschfarbe unterscheidet.

Die eingesetzte Waschfarbe ist bevorzugt in unvernetztem Zustand wasserlöslich und in vernetzem Zustand wasserunlöslich. Allgemein kann eine geeignete vernetzbare Waschfarbe wie folgt formuliert werden: Eine Vernetzung der Waschfarbe kann durch die Zugabe eines Photoinitiators oder eines Photoinitiatorgemisches ermöglicht werden. Ein wesentlicher Bestandteil der Waschfarbe ist ein bei Zimmertemperatur festes Bindemittel, das in dem eingesetzten Lösemittelgemisch bzw. Lösemittel, insbesondere in Wasser löslich ist und im Waschprozess auch wieder löslich ist und bevorzugt im Zusammenwirken mit den übrigen Bestandteilen vernetzt werden kann. Beispiele für erfindungsgemäß verwendbare Bindemittel sind Hydroxyethylcellulose, Hydroxypropylcellulose, Polyvinypyrrolidon, Casein, Carboxymethylcellulose, Stärke, Polyvinylalkohol, Polyacrylsäure oder Polyethylenglycol.

Eine Vernetzung der Waschfarbe kann durch einen multifunktionellen Reaktivverdünner gefördert werden. Dieser Reaktivverdünner muss mit dem verwendeten Lösemittel bzw. Lösemittelgemisch, insbesondere Wasser kompatibel sein. Durch den Ethoxylierungsgrad kann die Wasserkompatibilität angepasst werden.

Zur lasierenden Einfärbung der Waschfarbe kann insbesondere ein löslicher Farbstoff oder ein fein dispergiertes Pigment eingesetzt werden.

Vorteilhaft ist die Waschfarbe nach der physikalischen Trocknung wickelbar (Rolle zu Rolle Prozess), blockfrei bei Zimmertemperatur und weist ausreichende Löslichkeit in mindestens einem Lösemittel, insbesondere in Wasser auf.

Die genannte reflexionserhöhende Beschichtung ist vorteilhaft durch eine Metallisierung, eine hochbrechende Beschichtung, ein Dünnschichtelement mit Farbkippeffekt oder eine cholesterische Flüssigkristallschicht gebildet.

In einer vorteilhaften Ausgestaltung sind die Reliefstruktur der Sekundärstruktur und/ oder gegebenenfalls die Reliefstruktur der Primärstruktur durch Mikrospiegelanordnungen mit gerichtet reflektierenden Mikrospiegeln gebildet, insbesondere mit nicht-diffraktiv wirkenden Spiegeln, und vorzugsweise mit planen Spiegeln, Hohlspiegeln und/ oder fresnelartigen Spiegeln. Die lateralen Abmessungen der Mikrospiegel liegen dabei zweckmäßig unterhalb von 50 µm, vorteilhaft unterhalb von 20 µm, bevorzugt bei etwa 10 µm, also zwischen 7 µm und 13 µm. Auf der anderen Seite liegen die lateralen Abmessungen der Mikrospiegel aber auch oberhalb von 2 µm, insbesondere oberhalb von 3 µm oder sogar oberhalb von 5 µm. Die Ganghöhe der Mikrospiegel beträgt vorzugsweise weniger als 10 µm, bevorzugt weniger als 5 µm.

Grundsätzlich können anstelle von Mikrospiegeln auch andere geprägte Reliefstrukturen, insbesondere Fresnellinsen, Hohlspiegel, Hologrammstrukturen, Nanostrukturen oder diffraktive geblazte Gitter eingesetzt werden. Vorteilhaft können auch achromatische Beugungsgitter, sogenannte Mattstrukturen verwendet werden, die im Wesentlichen weißes Licht reflektieren. Zur Erzeugung bunter Farben können die Reliefstrukturen auch Subwellenstrukturen, insbesondere Subwellenlängengitter, aufweisen, die zur Farbgebung ebenfalls beitragen.

Enthält das Sicherheitselement zumindest zwei Reliefstrukturen, so ist mit Vorteil eine erste der Reliefstrukturen ausgelegt und ausgebildet, um einen ersten optisch variablen Effekt in einer ersten Farbe zu zeigen, und eine zweite der Reliefstrukturen ist ausgelegt und ausgebildet, einen zweiten optisch variablen Effekt in einer zweiten, unterschiedlichen Farbe zu zeigen.

In den Blockierungsbereichen ist die Waschfarbe entfernt, insbesondere soweit entfernt, dass sie keine Farbwirkung mehr verleiht, oder vollständig entfernt.

In einer vorteilhaften Ausgestaltung sind die Blockierungsbereiche und die Durchlassbereiche zumindest in einem Teilbereich des Flächenbereichs als regelmäßiges oder unregelmäßiges Raster mit Rasterelementen (Blockierungsbereiche) und Rasterzwischenräumen (Durchlassbereiche) ausgebildet, wobei die Abmessungen der Rasterelemente und Rasterzwischenräume in einer oder beiden lateralen Richtungen unterhalb von 140 µm, vorzugsweise zwischen 20 µm und 100 µm, insbesondere zwischen 20 µm und 60 µm liegen.

In den so gebildeten Rasterbereichen zeigt das Sicherheitselement vorteilhaft beim Kippen oder einer entsprechenden Änderung der Betrachtungsrichtung ein Erscheinungsbild, das plötzlich von einem ersten zu einem zweiten Erscheinungsbild (bzw. beim Zurückkippen vom zweiten zum ersten Erscheinungsbild) springt. Dabei erfolgt gleichzeitig und ohne Zwischen- oder Übergangsstufe eine Änderung des dargestellten Motivs (beispielsweise eine Wertzahl oder ein Wappen) und der Farbe (beispielsweise Magenta, Grün oder Blau). Ein solches übergangslos zwischen zwei unterschiedlichen Motiven mit zwei unterschiedlichen Farben wechselndes Erscheinungsbild wird als binärer Farb- und Effektwechsel bezeichnet.

Das Raster weist vorteilhaft eine konstante Flächendeckung durch die Rasterelemente auf, welche zweckmäßig zwischen 30% und 70%, vorzugsweise zwischen 40% und 60%, insbesondere bei etwa 50% liegt.

Alternativ oder zusätzlich zur Ausbildung eines Rasters ist vorgesehen, dass die Blockierungsbereiche und die Durchlassbereiche zumindest in einem Teilbereich des Flächenbereichs einen Effektbereich bilden, in dem die Blockierungsbereiche und/ oder die Durchlassbereiche laterale Abmessungen von mehr als 140 µm aufweisen.

In diesem Effektbereich zeigt das Sicherheitselement vorzugsweise zwei unterschiedliche Effekte (beispielsweise ein dreidimensionales Motiv und einen Bewegungseffekt wie einen laufenden Balken), die in zwei unterschiedlichen Farben in Erscheinung treten. Die Bereiche unterschiedlichen Farbeindrucks und unterschiedlicher Effekte sind dabei exakt zueinander gepassert, was nachfolgend auch als Farbe-zu-Effekt-Passerung bezeichnet wird.

Zumindest ein Blockierungsbereich und/ oder zumindest ein Durchlassbereich ist bei dieser Ausgestaltung mit Vorteil mit lateralen Abmessungen von mehr als 250 µm, vorzugsweise von mehr als 500 µm und insbesondere von mehr als 1 mm ausgebildet.

In einer vorteilhaften Ausgestaltung ist die reflexionserhöhende Beschichtung vollflächig und ohne Aussparungen ausgebildet. Alternativ können auch Negativkennzeichen in dem Sicherheitselement vorgesehen sein, die durch Aussparungen in der reflexionserhöhenden Beschichtung gebildet sind. Die Negativkennzeichen können beispielsweise Text, Symbole oder Wertzahlen bilden. Die Negativkennzeichen können nur in den Blockierungsbereichen oder nur in den Durchlassbereichen vorgesehen sein oder können auch beide Bereiche erfassen.

Der reflektive Flächenbereich des Sicherheitselements kann auch mit anderen Sicherheitsmerkmalen kombiniert sein, beispielsweise mit Hologrammen, insbesondere Echtfarbenhologrammen, mit Subwellenlängengittern oder anderen Subwellenlängenstrukturen, mit Mikrospiegelanordnungen ohne diffraktive Gitter, oder auch mit maschinenlesbaren Sicherheitsmerkmalen, die auf speziellen Materialeigenschaften, wie elektrischer Leitfähigkeit, magnetischen Eigenschaften, Lumineszenz, Fluoreszenz oder dergleichen basieren.

Das optisch variable Sicherheitselement kann weitere Schichten, wie etwa Schutz-, Abdeck- oder zusätzliche Funktionsschichten, Primerschichten oder Heißsiegellackschichten enthalten. Diese stellen allerdings nicht die wesentlichen Elemente der vorliegenden Erfindung dar und sind daher nicht näher beschrieben.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Die Erfindung enthält weiter ein Verfahren zum Herstellen eines optisch variablen Sicherheitselements, insbesondere eines der bereits beschriebenen Sicherheitselemente, bei dem
- ein Träger bereitgestellt wird, dessen Flächenausdehnung eine darauf senkrecht stehende z-Achse definiert,
- der Träger in einem Flächenbereich mit einer flächigen, transmissiven Primärstruktur versehen wird, die durch eine Druck- oder Prägestruktur gebildet ist, und
- die flächige Primärstruktur von einer Sekundärstruktur in Form einer Prägelackschicht bedeckt wird, die eine eingeprägte Reliefstruktur enthält und die in Blockierungsbereichen eine niedrige und in Durchlassbereichen eine hohe Durchlässigkeit für eine Vernetzungsstrahlung, insbesondere für UV-Strahlung aufweist,
- auf der der Sekundärstruktur gegenüberliegenden Seite der flächigen Primärstruktur, deckungsgleich mit den Durchlassbereichen, eine lasierend eingefärbte Waschfarbe aufgebracht und durch Einwirkung von Vernetzungsstrahlung vernetzt wird, welche der Primärstruktur in den Durchlassbereichen eine Farbwirkung verleiht, und dass
- eine reflexionserhöhende Beschichtung aufgebracht wird, die die Sekundärstruktur und, sofern die Durchlassbereiche durch Aussparungen der Sekundärstruktur gebildet werden, in den Durchlassbereichen auch die Primärstruktur beschichtet.

Bei einer vorteilhaften Verfahrensführung wird vor dem Aufbringen der reflexionserhöhenden Beschichtung eine vernetzbare Waschfarbe auf der der Sekundärstruktur gegenüberliegenden Seite des Trägers und damit auch auf der der Sekundärstruktur gegenüberliegenden Seite der Primärstruktur aufgebracht. Die Waschfarbe wird durch die als Belichtungsmaske wirkende Sekundärstruktur hindurch mit Vernetzungsstrahlung, insbesondere UV-Strahlung beaufschlagt, so dass die vernetzbare Waschfarbe in zu den Durchlassbereichen deckungsgleichen Flächenbereichen vernetzt wird und in zu den Blockierungsbereichen deckungsgleichen Flächenbereichen unvernetzt bleibt.

Die mit Vernetzungsstrahlung beaufschlagte Waschfarbe wird nachfolgend gewaschen und wird dadurch in den unvernetzten Flächenbereichen entfernt, während sie in den vernetzten Flächenbereichen erhalten bleibt. In den unvernetzten Flächenbereichen wird die Waschfarbe vorzugsweise vollständig entfernt, zumindest jedoch soweit entfernt - beispielsweise in ihrer Schichtdicke so stark verringert - dass sie keine Farbwirkung mehr verleiht.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen optisch variablen Sicherheitselement,
- Fig. 2: schematisch einen Ausschnitt des Sicherheitselements der Fig. 1 im Querschnitt, und
- Fig. 3: in (a) bis (h) Zwischenschritte bei der Herstellung des Sicherheitselements der Fig. 2.

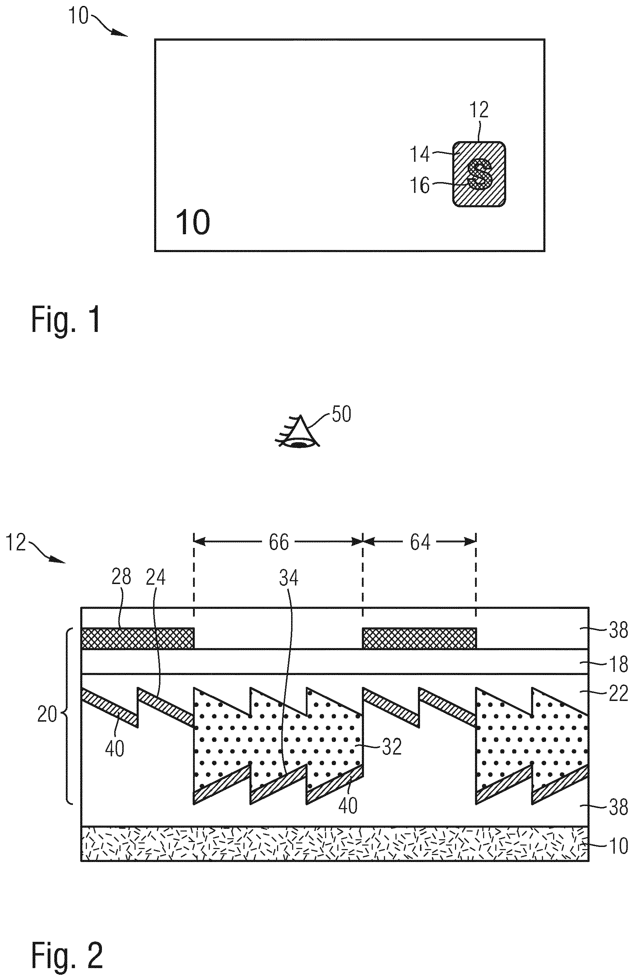

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen Sicherheitselement 12 in Form eines aufgeklebten Transferelements. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patches mit oder ohne eigene Trägerschicht) beispielsweise auch Sicherheitsfäden oder Sicherheitsstreifen in Betracht.

Das auf die Banknote 10 aufgebrachte Sicherheitselement 12 ist selbst sehr flach ausgebildet, vermittelt dem Betrachter aber dennoch den dreidimensionalen Eindruck eines sich scheinbar aus der Ebene der Banknote 10 herauswölbenden Motivs 14, das mit einer ersten Farbe erscheint. In der Praxis kann das Motiv 14 beispielsweise eine Wertzahl, ein Portrait oder ein anderes grafisches Motiv darstellen. Innerhalb des Motivs 14 ist in einem Teilbereich 16 ein Bewegungseffekt in einer zweiten Farbe sichtbar. Beispielsweise kann sich ein heller Balken beim Kippen der Banknote 10 entlang des geschwungenen Teilbereichs 16 vor und zurück bewegen und einen sogenannten Rolling-Bar-Effekt erzeugen. Die Bereiche unterschiedlicher Farbe (erste bzw. zweite Farbe) und unterschiedlicher Effekte (dreidimensionales Motiv bzw. laufender Balken) sind dabei exakt zueinander gepassert. Diese Passerung wird nachfolgend auch als Farbe-zu-Effekt-Passerung bezeichnet.

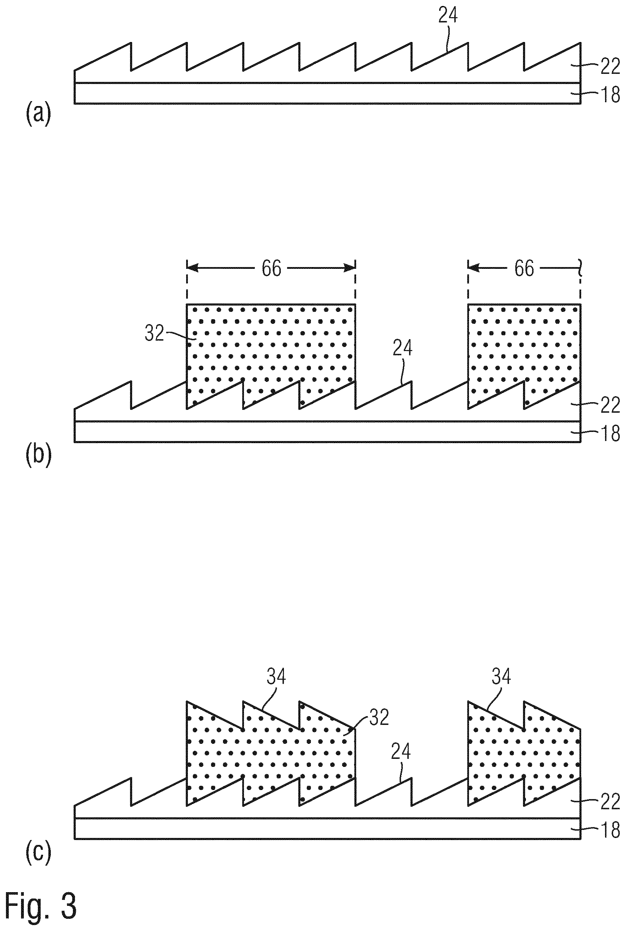

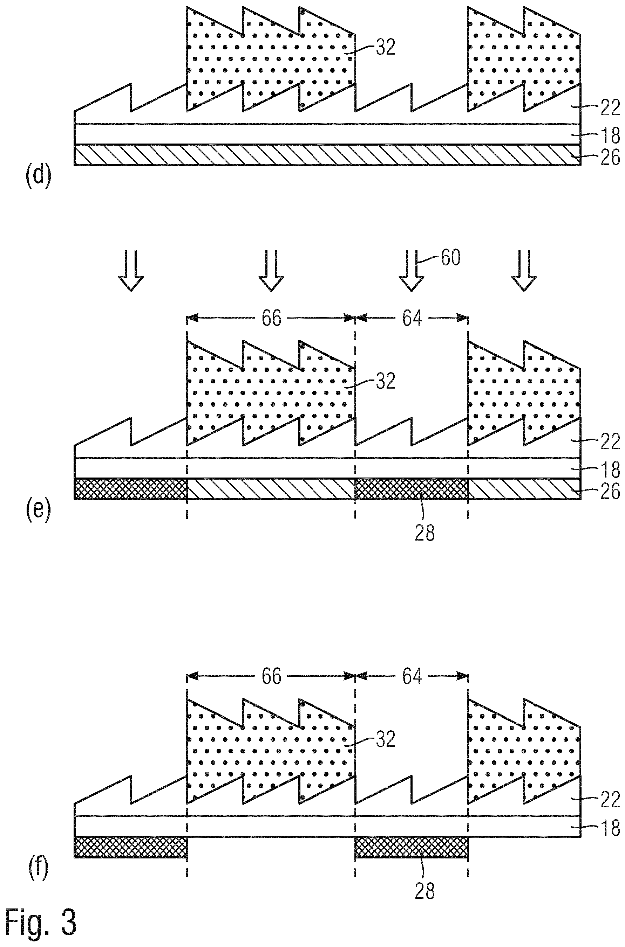

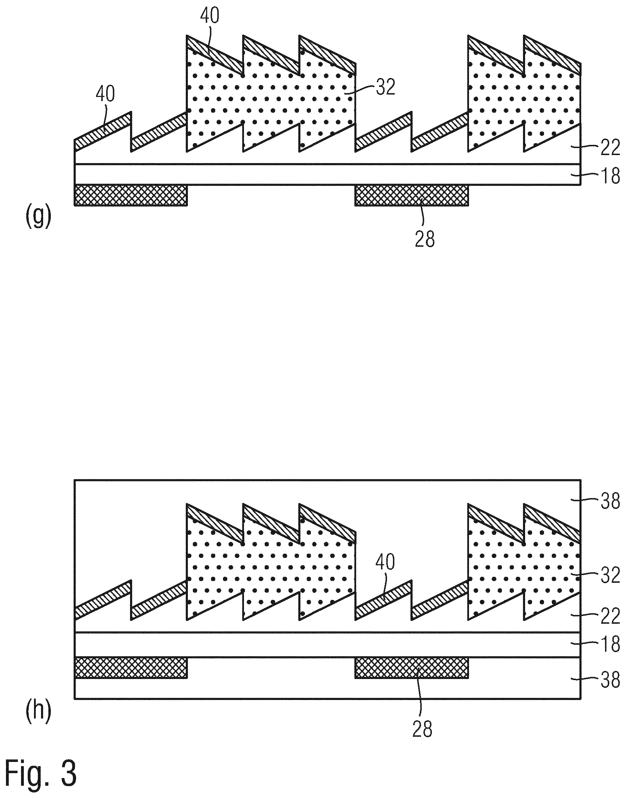

Der besondere Aufbau und die erfindungsgemäße Herstellung des Sicherheitselements 12 wird nun mit Bezug auf die Figuren 2 und 3 näher erläutert, wobei Fig. 2 schematisch einen Ausschnitt des auf die Banknote 10 aufgebrachten Sicherheitselements 12 im Querschnitt und Fig. 3 verschiedene Zwischenschritte bei der Herstellung des Sicherheitselements 12 zeigen.

Das Sicherheitselement 12 enthält einen flächigen, transparent farblosen Träger 18, beispielsweise eine transparente, farblose PET-Folie. Die Flächenausdehnung des Trägers 18 definiert eine x-y-Ebene und eine darauf senkrecht stehende z-Achse. Auf den beiden gegenüberliegenden Seiten des Trägers 18 ist ein aus mehreren Teilschichten bestehender reflektiver Flächenbereich 20 ausgebildet. Der reflektive Flächenbereich umfasst auf einer Seite des Trägers 18 einen Prägestrukturbereich mit zwei Mikrospiegel-Prägungen 24, 34 in zwei unterschiedlichen Höhenstufen und auf der gegenüberliegenden Seite des Trägers 18 einen farbigen Waschfarbbereich 28.

Ein erster Prägebereich 24, der im Ausführungsbeispiel die Primärstruktur des reflektiven Flächenbereichs bildet, ist durch Mikrospiegel-Prägungen gegeben, die in eine erste, auf dem Träger 18 aufgebrachte transparente Prägelackschicht 22 eingeprägt sind und deren Grundflächen in z-Richtung in einer ersten Höhe über dem Träger 18 liegen.

Die erste Prägelackschicht 22 ist in Teilbereichen 66 von einer Sekundärstruktur in Form einer zweiten Prägelackschicht 32 mit einer zweiten, unterschiedlichen Reliefstruktur 34 mit Mikrospiegel-Prägungen bedeckt.

Die zweiten Prägelackschicht 32 ist visuell sichtbar lasierend eingefärbt, beispielsweise rot lasierend eingefärbt, und ist zudem mit einem UV-Absorber versetzt, so dass sie für UV-Strahlung undurchlässig ist. Die Teilbereiche 66, in denen die zweite Prägelackschicht 32 vorliegt, bilden daher Blockierungsbereiche für UV-Strahlung, während die Bereiche 64 ohne überdeckende zweite Prägelackschicht 32 Durchlassbereiche hoher UV-Durchlässigkeit bilden.

Die Grundflächen der Mikrospiegel des zweiten Prägebereichs 34 liegen in einer zweiten, größeren Höhe über dem Träger 18. Da das Sicherheitselement auf Betrachtung von der den Prägelackschichten 22, 32 gegenüberliegenden Seite des Trägers her ausgelegt ist (Betrachter 50), bildet die Reliefstruktur der ersten Prägelackschicht 22 eine höher liegende und die Reliefstruktur der zweiten Prägelackschicht 32 eine tiefer liegende Reliefstruktur des Sicherheitselements.

Die Mikrospiegelprägungen bzw. Mikrospiegelanordnungen 24, 34 enthalten jeweils eine Vielzahl von gegen die x-y-Ebene geneigten Mikrospiegeln, deren lokalen Neigungswinkel gerade so gewählt sind, dass die Reliefstrukturen der Mikrospiegelprägungen 24, 34 im Zusammenspiel mit der Farbwirkung der nachfolgend beschriebene reflexionserhöhenden Beschichtung 40, der Farbwirkung der zweiten Prägelackschicht 32 und der Farbwirkung der Waschfarbbereiche ein gewünschtes optisches Erscheinungsbild erzeugen. Konkret sind die Neigungswinkel der Mikrospiegel im Ausführungsbeispiel so gewählt, dass die Mikrospiegelanordnungen 24, 34 den herausgewölbten dreidimensionalen Eindruck des Motivs 14 und den Rolling-Bar-Effekt des Teilbereichs 16 erzeugen.

Die Mikrospiegel der Mikrospiegelprägungen 24, 34 weisen im Ausführungsbeispiel eine laterale Abmessung von 10 x 10 µm² und eine maximale Höhe von 3,5 µm auf. Der auf die Grundflächen bezogene Höhenversatz kann beispielsweise 6 µm betragen.

Die beiden Mikrospiegelanordnung 24, 34 sind mit einer gemeinsamen, jeweils dem Reliefverlauf der Prägelackschicht 22 bzw. 32 folgenden, reflexionserhöhenden Beschichtung, beispielsweise einer opaken Metallisierung 40 versehen, welche in den Blockierungsbereichen 66 auf der zweiten Prägelackschicht 32 und in den Durchlassbereichen 64 auf der ersten Prägelackschicht 22 liegt.

Auf der den Mikrospiegelanordnung 24, 34 gegenüberliegenden Seite des Trägers 18 ist deckungsgleich zu den Durchlassbereichen 64 der zweiten Prägelackschicht 32 eine vernetzte, lasierende Waschfarbe 28 angeordnet, die beispielsweise grün lasierend ausgebildet ist.

Die unterschiedlichen Erscheinungsbilder des Sicherheitselements 12 für einen Betrachter 50 ergeben sich durch das Zusammenspiel der grün lasierenden Waschfarbe 28 mit der Reliefstruktur der ersten Prägelackschicht 22 und deren opaker Metallisierung 40 einerseits, und die Farbwirkung der rot lasierenden Prägelackschicht 32 mit deren Reliefstruktur und opaker Metallisierung 40 andererseits.

Konkret sind im Ausführungsbeispiel der Fig. 2 die beiden Mikrospiegelanordnungen 24, 34 im Flächenbereich des Sicherheitselements 12 jeweils unmittelbar aneinander angrenzend angeordnet, wobei der Blockierungsbereich 66 beispielsweise durch einen 5 mm breiten und 2 cm langen gekrümmten Streifen innerhalb eines 2,5 x 2,5 cm² großen Flächenbereichs gebildet ist und der Durchlassbereich 64 durch den den Steifen 66 umgebenden Flächenbereich des Sicherheitselements gebildet ist.

In dem Durchlassbereich 64 blickt der Betrachter 50 durch eine transparente Schutzlackschicht 38, die grün lasierende Waschfarbe 28 und die transparente Prägelackschicht 22 auf die auf ihrer Rückseite metallisch verspiegelte, höher liegende Mikrospiegelanordnung 24, so dass das Sicherheitselement 12 dort mit einem grün glänzenden Farbeindruck und dem optisch variablen Effekt der höher liegenden Mikrospiegelprägung 24 erscheint.

In dem Blockierungsbereich 66 blickt der Betrachter 50 dagegen durch die transparente Schutzlackschicht 38, durch die Lücken der Waschfarbschicht, durch die transparente Prägelackschicht 22 und die rot lasierende Prägelackschicht 32 hindurch auf die ebenfalls rückseitig metallisch verspiegelte, tiefer liegende Mikrospiegelanordnung 34. Der Brechungsindex der zweiten Prägelackschicht 32 unterscheidet sich nicht oder kaum von dem Brechungsindex der ersten Prägelackschicht 22, so dass die im Blockierungsbereich 66 an der Grenzfläche der beiden Prägelackschichten 22, 32 vorhandene Prägung visuell nicht in Erscheinung tritt. Sie wird durch das Überdrucken mit der zweiten Prägelackschicht vielmehr praktisch gelöscht. Das Sicherheitselement 12 erscheint daher im Blockierungsbereich 66 mit einem rot glänzenden Farbeindruck und dem optisch variablen Effekt der tiefer liegenden Mikrospiegelprägung 34.

Da der Höhenunterschied der beiden Mikrospiegelanordnungen 24, 34 im Bereich von einigen Mikrometern liegt, ist er für den Betrachter nicht wahrnehmbar, so dass die beiden verschiedenfarbigen Motive und die unterschiedlichen Effekte in exaktem Passer nebeneinander angeordnet zu sein scheinen.

Die erfindungsgemäße Herstellung des Sicherheitselements 12 wird nun mit Bezug auf die Figur 3 näher beschrieben, wobei (a) bis (h) jeweils Zwischenschritte bei der Herstellung des Sicherheitselements zeigen.

Zunächst wird mit Bezug auf Fig. 3(a) ein transparenter Träger 18, beispielsweise eine transparente, farblose PET-Folie bereitgestellt und mit einer Primärstruktur in Form einer ersten, transparenten und farblosen Prägelackschicht 22 versehen. Mit einem selbst nicht gezeigten Prägewerkzeug wird die Mikrospiegelprägung 24, die das gewünschte Motiv 14 des Sicherheitselements 12 erzeugt, in die erste Prägelackschicht 22 eingeprägt. Beim bevorzugten Einsatz eines UV-Prägelacks wird die Prägelackschicht 22 anschließend gehärtet.

Auf die erste Prägelackschicht 22 wird mit einem selbst nicht gezeigten Druckzylinder im gewünschten Blockierungsbereich 66 des laufenden Balkens eine Sekundärstruktur in Form einer zweiten Prägelackschicht 32 aufgedruckt, wie in Fig. 3(b) dargestellt. Die zweite Prägelackschicht 32 ist dabei beispielsweise rot lasierend eingefärbt und ist zudem mit einem UV-Absorber versehen. Der Brechungsindex der zweiten Prägelackschicht 32 unterscheidet sich nicht oder kaum von dem Brechungsindex der ersten Prägelackschicht 22, so dass die im Blockierungsbereich 66 vorliegende Information der ersten Mikrospiegelprägung 24 gelöscht wird und visuelle nicht mehr in Erscheinung tritt.

Mit Bezug auf Fig. 3(c) wird die zweite Prägelackschicht 32 dann mit einem selbst nicht gezeigten Prägewerkzeug mit der den Rolling-Bar-Effekt erzeugenden Mikrospiegelprägung 34 versehen. Wird ein UV-Prägelack eingesetzt, so wird die Prägelackschicht 32 anschließend gehärtet.

Anschließend wird auf die den Prägelackschichten 22, 32 gegenüberliegende Seite des Trägers 18 eine vollflächige Schicht einer vernetzbaren, lasierenden Waschfarbe 26 aufgebracht, wie in Fig. 3(d) dargestellt.

Eine vorteilhafte Waschfarbe 26 enthält als einen wesentlichen Bestandteil ein wasserlösliches, bei Zimmertemperatur festes Bindemittel, das in Zusammenwirkung mit den übrigen Bestandteilen vernetzbar ist und das zur Einfärbung mit einem löslichen Farbstoff oder einem fein dispergierten Pigment versetzt ist.

Die so erhaltende Schichtenfolge wird dann von der Seite der Prägelackschichten 22, 32 her mit UV-Strahlung 60 beaufschlagt, wie in Fig. 3(e) dargestellt. In den Durchlassbereichen 64 führt die UV-Strahlung zur Vernetzung der Waschfarbe 26, die dadurch in diesen Bereichen 28 unlöslich und nicht mehr abwaschbar wird (in den Figuren durch enge Kreuzschraffur angedeutet). Dagegen wird die UV-Strahlung 60 in den Blockierungsbereichen 66 von dem in der Prägelackschicht 32 enthaltenen UV-Absorber blockiert, so dass die Waschfarbe 26 in den zu den Blockierungsbereichen 66 deckungsgleichen Bereichen wasserlöslich bleibt.

Anschließend wird die UV-beaufschlagte Schichtenfolge gewaschen und die deckungsgleich zu den Blockierungsbereichen 66 vorliegende Waschfarbe dadurch entfernt. Die Blockierungsbereiche 66 sind danach frei von Waschfarbe. Auf dem Träger 18 verbleiben allerdings die vernetzten, unlöslichen Waschfarbbbereiche 28, die deckungsgleich zu den Durchlassbereichen 64 der zweiten Prägelackschicht 32 liegen, wie in Fig. 3(f) gezeigt.

Mit Bezug auf Fig. 3(g) werden die beiden Prägelackschichten 22, 32 dann vollflächig mit einer gemeinsamen reflexionserhöhenden Beschichtung 40, insbesondere einer Metallisierung oder auch einer hochbrechenden Beschichtung versehen. Der Brechungsindexunterschied zwischen der reflexionserhöhenden Beschichtung 40 und der Prägelackschicht 22 bzw. 32 stellt sicher, dass die Mikrospiegelprägung 24, 34 bei der Betrachtung des Sicherheitselements von der Seite der Prägelackschichten her deutlich in Erscheinung treten. Im gezeigten Ausführungsbeispiel ist die reflexionserhöhende Beschichtung 40 durch eine Aluminiumschicht gebildet.

Schließlich werden die beschichteten Mikrospiegelanordnungen 24, 34 und die strukturierte Wachfarbbereiche 28 jeweils mit einer transparenten Lackschicht 38 eingeebnet, wie in Fig. 3(h) dargestellt, und gegebenenfalls weitere, für den Einsatz des Sicherheitselements gewünschten Funktions- oder Schutzschichten aufgebracht um das Sicherheitselement fertigzustellen.

Das Sicherheitselement der Fig. 3(h) kann dann beispielsweise über eine Klebeschicht auf das Banknotenpapier eine Banknote aufgeklebt werden, wie in Fig. 2 gezeigt.

### Bezugszeichenliste

- 10: Banknote
- 12: Sicherheitselement
- 14: Motiv
- 16: Teilbereich mit Rolling-Bar-Effekt
- 18: Träger
- 20: reflektiver Flächenbereich
- 22: erste Prägelackschicht
- 24: erste Prägestruktur
- 26: vernetzbare, lasierende Waschfarbe
- 28: vernetzte Waschfarbe
- 32: zweite Prägelackschicht
- 34: zweite Prägestruktur
- 38: transparente Lackschicht
- 40: reflexionserhöhende Beschichtung
- 50: Betrachter
- 60: UV-Strahlung
- 64: Durchlassbereiche
- 66: Blockierungsbereiche

## Patentansprüche

1. Optisch variables Sicherheitselement (12) zur Absicherung von Wertgegenständen, dessen Flächenausdehnung eine darauf senkrecht stehende z-Achse definiert, mit einem reflektiven Flächenbereich (20), wobei
- der reflektive Flächenbereich (20) eine flächige, transmissive Primärstruktur (22) enthält, die durch eine Druck- oder Prägestruktur gebildet ist,
- die flächige Primärstruktur (22) von einer Sekundärstruktur (32) in Form einer Prägelackschicht bedeckt ist, die eine eingeprägte Reliefstruktur (34) enthält und die in Blockierungsbereichen (66) eine niedrige und in Durchlassbereichen (64) eine hohe Durchlässigkeit für eine Vernetzungsstrahlung aufweist,
- eine reflexionserhöhende Beschichtung (40) vorgesehen ist, die die Sekundärstruktur (32) und, sofern die Durchlassbereiche (64) durch Aussparungen der Sekundärstruktur (32) gebildet sind, in den Durchlassbereichen (64) auch die Primärstruktur (22) beschichtet, und dass
- auf der der Sekundärstruktur (32) gegenüberliegenden Seite der flächigen Primärstruktur (22), deckungsgleich mit den Durchlassbereichen (64), eine vernetzte, lasierend eingefärbte Waschfarbe (28) angeordnet ist, die der Primärstruktur (22) in den Durchlassbereichen (64) eine Farbwirkung verleiht.

2. Sicherheitselement nach Anspruch 1, wobei
die Durchlassbereiche (64) der Sekundärstruktur (32) durch Aussparungen der Sekundärstruktur gebildet sind; oder
die Durchlassbereiche (64) und die Blockierungsbereiche (66) der Sekundärstruktur (32) durch Materialbereiche der Sekundärstruktur gebildet, die sich in ihrer Durchlässigkeit für die Vernetzungsstrahlung unterscheiden.

3. Sicherheitselement nach wenigstens einem der Ansprüche 1 bis 2,
wobei die Sekundärstruktur (32) in den Durchlassbereichen (64) die hohe Durchlässigkeit für UV-Strahlung als Vernetzungsstrahlung aufweist; und/oder
in den Blockierungsbereichen (66) der Sekundärstruktur (32) ein Absorber für die Vernetzungsstrahlung, insbesondere ein UV-Absorber vorgesehen ist; und/oder
die reflexionserhöhende Beschichtung (40) in den Blockierungsbereichen (66) dem Reliefverlauf der Reliefstruktur (34) der Sekundärstruktur-Prägelackschicht (32) folgt.

4. Sicherheitselement nach wenigstens einem der Ansprüche 1 bis 3,
wobei die Primärstruktur (22) in Form einer weiteren Prägelackschicht ausgebildet ist, die mit einer eingeprägte Reliefstruktur (24) versehen ist, die unterschiedlich zu der Reliefstruktur (34) der Sekundärstruktur-Prägelackschicht (32) ausgebildet ist, wobei vorzugsweise die reflexionserhöhende Beschichtung (40) in durch Aussparungen gebildeten Durchlassbereichen (64) der Sekundärstruktur (32) dem Reliefverlauf der weiteren Reliefstruktur (24) der Primärstruktur (22) folgt.

5. Sicherheitselement nach wenigstens einem der Ansprüche 1 bis 4,
wobei die Sekundärstruktur-Prägelackschicht (32) lasierend eingefärbt ist, vorzugsweise mit einer Farbwirkung, die sich von der Farbwirkung der lasierend eingefärbten Waschfarbe (28) unterscheidet.

6. Sicherheitselement nach wenigstens einem der Ansprüche 1 bis 5,
wobei die Waschfarbe in unvernetztem Zustand (26) wasserlöslich und in vernetzem Zustand (28) wasserunlöslich ist.

7. Sicherheitselement nach wenigstens einem der Ansprüche 1 bis 6,
wobei die reflexionserhöhende Beschichtung (40) durch eine Metallisierung, eine hochbrechende Beschichtung, ein Dünnschichtelement mit Farbkippeffekt oder eine cholesterische Flüssigkristallschicht gebildet ist.

8. Sicherheitselement nach wenigstens einem der Ansprüche 1 bis 7,
wobei die Reliefstruktur (34) der Sekundärstruktur (32) und/oder die gegebenenfalls vorliegende Reliefstruktur (24) der Primärstruktur (22) durch Mikrospiegelanordnungen mit gerichtet reflektierenden Mikrospiegeln gebildet sind, insbesondere mit nicht-diffraktiv wirkenden Spiegeln, und vorzugsweise mit planen Spiegeln, Hohlspiegeln und/ oder fresnelartigen Spiegeln.

9. Sicherheitselement nach wenigstens einem der Ansprüche 1 bis 8,
wobei die Blockierungsbereiche (66) und die Durchlassbereiche (64) zumindest in einem Teilbereich des Flächenbereichs als regelmäßiges oder unregelmäßiges Raster mit Rasterelementen und Rasterzwischenräumen ausgebildet sind, wobei die Abmessungen der Rasterelemente und Rasterzwischenräume in einer oder beiden lateralen Richtungen unterhalb von 140 µm, vorzugsweise zwischen 20 µm und 100 µm, insbesondere zwischen 20 µm und 60 µm liegen.

10. Sicherheitselement nach wenigstens einem der Ansprüche 1 bis 9,
wobei die Blockierungsbereiche (66) und die Durchlassbereiche (64) zumindest in einem Teilbereich des Flächenbereichs einen Effektbereich bilden, in dem die Blockierungsbereiche und/ oder die Durchlassbereiche laterale Abmessungen von mehr als 140 µm aufweisen.

11. Sicherheitselement nach wenigstens einem der Ansprüche 1 bis 10,
wobei in dem Sicherheitselement (12) durch Aussparungen in der reflexionserhöhenden Beschichtung (40) Negativkennzeichen gebildet sind.

12. Datenträger (10) mit einem optisch variablen Sicherheitselement (12) nach wenigstens einem der Ansprüche 1 bis 11.

13. Verfahren zum Herstellen eines optisch variablen Sicherheitselements (12), bei dem
- ein Träger (18) bereitgestellt wird, dessen Flächenausdehnung eine darauf senkrecht stehende z-Achse definiert,
- der Träger (18) in einem Flächenbereich (20) mit einer flächigen, transmissiven Primärstruktur (22) versehen wird, die durch eine Druck- oder Prägestruktur gebildet ist,
- die flächige Primärstruktur (22) von einer Sekundärstruktur (32) in Form einer Prägelackschicht bedeckt wird, die eine eingeprägte Reliefstruktur (34) enthält und die in Blockierungsbereichen (66) eine niedrige und in Durchlassbereichen (64) eine hohe Durchlässigkeit für eine Vernetzungsstrahlung aufweist,
- auf der der Sekundärstruktur (32) gegenüberliegenden Seite der flächigen Primärstruktur (22), deckungsgleich mit den Durchlassbereichen (64), eine lasierend eingefärbte Waschfarbe aufgebracht und durch Einwirkung von Vernetzungsstrahlung vernetzt wird, welche der Primärstruktur (22) in den Durchlassbereichen (64) eine Farbwirkung verleiht, und dass
- eine reflexionserhöhende Beschichtung (40) aufgebracht wird, die die Sekundärstruktur (32) und, sofern die Durchlassbereiche (64) durch Aussparungen der Sekundärstruktur (32) gebildet werden, in den Durchlassbereichen (64) auch die Primärstruktur (22) beschichtet.

14. Verfahren nach Anspruch 13, wobei vor dem Aufbringen der reflexionserhöhenden Beschichtung (40)
- die vernetzbare Waschfarbe (26) auf der der Sekundärstruktur (32) gegenüberliegenden Seite des Trägers (18) aufgebracht wird,
- die Waschfarbe (26) durch die als Belichtungsmaske wirkende Sekundärstruktur (32) hindurch mit Vernetzungsstrahlung, insbesondere UV-Strahlung beaufschlagt wird, so dass die vernetzbare Waschfarbe (26) in zu den Durchlassbereichen (64) deckungsgleichen Flächenbereichen vernetzt wird und in zu den Blockierungsbereichen (66) deckungsgleichen Flächenbereichen unvernetzt bleibt.

15. Verfahren nach Anspruch 13 oder 14, wobei die durch die Sekundärstruktur (32) hindurch mit Vernetzungsstrahlung beaufschlagte Waschfarbe (26, 28) gewaschen wird, und dadurch in den unvernetzten Flächenbereichen entfernt wird und in den vernetzten Flächenbereichen erhalten bleibt.

## Claims

1. Optically variable security element (12) for safeguarding valuable objects, the surface area of which security element defines a z-axis perpendicular thereto, comprising a reflective surface region (20), wherein
- the reflective surface region (20) contains a planar, transmissive primary structure (22) formed by a printing or embossing structure,
- the planar primary structure (22) is covered by a secondary structure (32) in the form of an embossing lacquer layer, which contains an impressed relief structure (34) and which has in blocking regions (66) a low transmissivity and in transmissive regions (64) a high transmissivity for a crosslinking radiation,
- a reflection-enhancing coating (40) is provided, which coats the secondary structure (32) and, inasmuch as the transmissive regions (64) are formed by cutouts of the secondary structure (32), in the transmissive regions (64) also coats the primary structure (22), and in that
- on the opposite side of the planar primary structure (22) relative to the secondary structure (32), congruently with the transmissive regions (64), there is arranged a crosslinked, translucently coloured washable ink (28), which imparts a colour effect to the primary structure (22) in the transmissive regions (64).

2. Security element according to Claim 1, wherein the transmissive regions (64) of the secondary structure (32) are formed by cutouts of the secondary structure; or the transmissive regions (64) and the blocking regions (66) of the secondary structure (32) are formed by material regions of the secondary structure which differ in their transmissivity for the crosslinking radiation.

3. Security element according to at least one of Claims 1 to 2,
wherein the secondary structure (32) has the high transmissivity for UV radiation as crosslinking radiation in the transmissive regions (64); and/or an absorber for the crosslinking radiation, in particular a UV absorber, is provided in the blocking regions (66) of the secondary structure (32); and/or
the reflection-enhancing coating (40) follows the relief course of the relief structure (34) of the secondary structure embossing lacquer layer (32) in the blocking regions (66).

4. Security element according to at least one of Claims 1 to 3,
wherein the primary structure (22) is embodied in the form of a further embossing lacquer layer provided with an impressed relief structure (24) embodied differently from the relief structure (34) of the secondary structure embossing lacquer layer (32), wherein preferably the reflection-enhancing coating (40) follows the relief course of the further relief structure (24) of the primary structure (22) in transmissive regions (64) of the secondary structure (32) that are formed by cutouts.

5. Security element according to at least one of Claims 1 to 4,
wherein the secondary structure embossing lacquer layer (32) is translucently coloured, preferably with a colour effect that differs from the colour effect of the translucently coloured washable ink (28).

6. Security element according to at least one of Claims 1 to 5, wherein the washable ink is water-soluble in an uncrosslinked state (26) and water-insoluble in a crosslinked state (28).

7. Security element according to at least one of Claims 1 to 6,
wherein the reflection-enhancing coating (40) is formed by a metallization, a high refractive index coating, a thin-film element with a colour shift effect or a cholesteric liquid crystal layer.

8. Security element according to at least one of Claims 1 to 7,
wherein the relief structure (34) of the secondary structure (32) and/or the optionally present relief structure (24) of the primary structure (22) are/is formed by micromirror arrangements with directionally reflective micromirrors, in particular with mirrors having a non-diffractive effect, and preferably with plane mirrors, concave mirrors and/or Fresnel-like mirrors.

9. Security element according to at least one of Claims 1 to 8,
wherein the blocking regions (66) and the transmissive regions (64) at least in a partial region of the surface region are embodied as a regular or irregular grid with grid elements and grid interspaces, wherein the dimensions of the grid elements and grid interspaces are less than 140 µm, preferably between 20 µm and 100 µm, in particular between 20 µm and 60 µm, in one or both lateral directions.

10. Security element according to at least one of Claims 1 to 9,
wherein the blocking regions (66) and the transmissive regions (64) at least in a partial region of the surface region form an effect region in which the blocking regions and/or the transmissive regions have lateral dimensions of more than 140 µm.

11. Security element according to at least one of Claims 1 to 10,
wherein in the security element (12) negative identifiers are formed by cutouts in the reflection-enhancing coating (40).

12. Data carrier (10) comprising an optically variable security element (12) according to at least one of Claims 1 to 11.

13. Method for producing an optically variable security element (12), wherein
- a carrier (18) is provided, the surface area of which defines a z-axis perpendicular thereto,
- in a surface region (20) the carrier (18) is provided with a planar, transmissive primary structure (22) formed by a printing or embossing structure,
- the planar primary structure (22) is covered by a secondary structure (32) in the form of an embossing lacquer layer, which contains an impressed relief structure (34) and which has in blocking regions (66) a low transmissivity and in transmissive regions (64) a high transmissivity for a crosslinking radiation,
- on the opposite side of the planar primary structure (22) relative to the secondary structure (32), congruently with the transmissive regions (64), a translucently coloured washable ink is applied and crosslinked by the action of crosslinking radiation, which imparts a colour effect to the primary structure (22) in the transmissive regions (64), and in that
- a reflection-enhancing coating (40) is applied, which coats the secondary structure (32) and, inasmuch as the transmissive regions (64) are formed by cutouts of the secondary structure (32), in the transmissive regions (64) also coats the primary structure (22).

14. Method according to Claim 13, wherein prior to applying the reflection-enhancing coating (40)
- the crosslinkable washable ink (26) is applied on the opposite side of the carrier (18) relative to the secondary structure (32),
- crosslinking radiation, in particular UV radiation, impinges on the washable ink (26) through the secondary structure (32) acting as an exposure mask, such that the crosslinkable washable ink (26) is crosslinked in surface regions congruent with the transmissive regions (64) and remains uncrosslinked in surface regions congruent with the blocking regions (66).

15. Method according to Claim 13 or 14, wherein the washable ink (26, 28) impinged on by crosslinking radiation through the secondary structure (32) is washed, and as a result is removed in the uncrosslinked surface regions and is retained in the crosslinked surface regions.

## Revendications

1. Élément de sécurité (12) optiquement variable pour sécuriser des objets de valeur, dont l'étendue plane définit un axe z perpendiculaire à lui, comprenant une zone de surface réfléchissante (20), dans lequel
- la zone de surface réfléchissante (20) comprend une structure primaire plane et transmissive (22) qui est formée par une structure imprimée ou gaufrée,
- la structure primaire plane (22) est recouverte d'une structure secondaire (32) sous la forme d'une couche de laque gaufrée qui comprend une structure en relief gaufrée (34) et qui comprend, dans des zones de blocage (66), une faible perméabilité à un rayonnement de réticulation, et, dans des zones de passage (64), une perméabilité élevée à un tel rayonnement,
- un revêtement augmentant la réflexion (40) est prévu, qui recouvre la structure secondaire (32) et, dans la mesure où les zones de passage (64) sont formées par des évidements de la structure secondaire (32), recouvre également la structure primaire (22) dans les zones de passage (64), et
- une peinture réticulée lavable (28), teintée à la manière d'une lasure, est appliquée sur le côté de la structure primaire plane (22) opposé à la structure secondaire (32), de manière à recouvrir les zones de passage (64), qui confère à la structure primaire (22) un effet coloré dans les zones de passage (64).

2. Élément de sécurité selon la revendication 1, dans lequel les zones de passage (64) de la structure secondaire (32) sont formées par des évidements de la structure secondaire ; ou
les zones de passage (64) et les zones de blocage (66) de la structure secondaire (32) sont formées par des zones de matériau de la structure secondaire qui se distinguent par leur perméabilité au rayonnement de réticulation.

3. Élément de sécurité selon au moins une des revendications 1 et 2,
dans lequel la structure secondaire (32) présente, dans les zones de passage (64), une perméabilité élevée au rayonnement UV en tant que rayonnement de réticulation ; et/ou dans les zones de blocage (66) de la structure secondaire (32) est prévu un absorbeur pour le rayonnement de réticulation, en particulier un absorbeur d'UV ; et/ou
le revêtement augmentant la réflexion (40) dans les zones de blocage (66) suit le profil en relief de la structure en relief (34) de la couche de laque gaufrée (32) de la structure secondaire.

4. Élément de sécurité selon au moins une des revendications 1 à 3,
dans lequel la structure primaire (22) est réalisée sous la forme d'une autre couche de laque gaufrée qui est pourvue d'une structure en relief gaufrée (24) qui est différente de la structure en relief (34) de la couche de laque gaufrée (32) de la structure secondaire, le revêtement augmentant la réflexion (40) suivant de préférence le profil en relief de l'autre structure en relief (24) de la structure primaire (22) dans des zones de passage (64) de la structure secondaire (32) formées par des évidements.

5. Élément de sécurité selon au moins une des revendications 1 à 4,
dans lequel la couche de laque gaufrée (32) de la structure secondaire est colorée à la manière d'une lasure, de préférence avec un effet de couleur qui se distingue de l'effet de couleur de la peinture lavable (28) colorée à la manière d'une lasure.

6. Élément de sécurité selon au moins une des revendications 1 à 5, dans lequel la peinture lavable est soluble dans l'eau à l'état non réticulé (26) et insoluble dans l'eau à l'état réticulé (28).

7. Élément de sécurité selon au moins une des revendications 1 à 6,
dans lequel le revêtement augmentant la réflexion (40) est formé par une métallisation, un revêtement à indice de réfraction élevé, un élément à couche mince avec effet de changement de couleur ou une couche de cristaux liquides cholestériques.

8. Élément de sécurité selon au moins une des revendications 1 à 7,
dans lequel la structure en relief (34) de la structure secondaire (32) et/ou la structure en relief (24) éventuellement présente de la structure primaire (22) sont formées par des agencements de micro-miroirs avec des micro-miroirs à réflexion directionnelle, en particulier avec des miroirs à effet non diffractif, et de préférence avec des miroirs plans, des miroirs concaves et/ou des miroirs de type Fresnel.

9. Élément de sécurité selon au moins une des revendications 1 à 8,
dans lequel les zones de blocage (66) et les zones de passage (64) sont réalisées au moins dans une zone partielle de la zone plane sous forme de trame régulière ou irrégulière avec des éléments de trame et des espaces intermédiaires de trame, les dimensions des éléments de trame et des espaces intermédiaires de trame dans une ou deux directions latérales étant inférieures à 140 µm, de préférence comprises entre 20 µm et 100 µm, en particulier entre 20 µm et 60 µm.

10. Élément de sécurité selon au moins une des revendications 1 à 9,
dans lequel les zones de blocage (66) et les zones de passage (64) forment, au moins dans une zone partielle de la zone superficielle, une zone d'effet dans laquelle les zones de blocage et/ou les zones de passage ont des dimensions latérales supérieures à 140 µm.

11. Élément de sécurité selon au moins une des revendications 1 à 10,
dans lequel des marquages négatifs sont formés dans l'élément de sécurité (12) par des évidements dans le revêtement augmentant la réflexion (40).

12. Support de données (10) comprenant un élément de sécurité optiquement variable (12) selon au moins une des revendications 1 à 11.

13. Procédé de fabrication d'un élément de sécurité optiquement variable (12), dans lequel
- il est fourni un support (18) dont l'étendue spatiale définit un axe z perpendiculaire à celui-ci,
- le support (18) est pourvu, dans une zone de surface (20), d'une structure primaire (22) plane et transmissive, qui est formée par une structure imprimée ou gaufrée,
- la structure primaire plane (22) est recouverte d'une structure secondaire (32) sous forme d'une couche de laque gaufrée qui contient une structure en relief gaufrée (34) et qui présente, dans des zones de blocage (66), une faible perméabilité à un rayonnement de réticulation, et, dans des zones de passage (64), une perméabilité élevée à un tel rayonnement,
- une peinture lavable, colorée à la manière d'une lasure, est appliquée sur le côté de la structure primaire plane (22) opposé à la structure secondaire (32), de manière à recouvrir les zones de passage (64), et est réticulée sous l'effet d'un rayonnement de réticulation, qui confère à la structure primaire (22) un effet coloré dans les zones de passage (64), et
- un revêtement augmentant la réflexion (40) est appliqué, qui recouvre la structure secondaire (32) et, si les zones de passage (64) sont formées par des évidements dans la structure secondaire (32), recouvre également la structure primaire (22) dans les zones de passage (64).

14. Procédé selon la revendication 13, dans lequel, avant l'application du revêtement augmentant la réflexion (40),
- la peinture lavable réticulable (26) est appliquée sur le côté du support (18) opposé à la structure secondaire (32),
- la peinture lavable (26) est exposée à un rayonnement de réticulation, en particulier un rayonnement UV, à travers la structure secondaire (32) agissant sous forme de masque d'exposition, de sorte que la peinture lavable réticulable (26) est réticulée dans des zones de surface correspondant aux zones de passage (64) et reste non réticulée dans les zones de surface correspondant aux zones de blocage (66).

15. Procédé selon la revendication 13 ou la revendication 14, dans lequel la peinture lavable (26, 28) soumise au rayonnement de réticulation à travers la structure secondaire (32) est lavée et est ainsi éliminée dans les zones de surface non réticulées et est conservée dans les zones de surface réticulées.
